# EUROPEAN PATENT APPLICATION

(11) **EP 0 564 748 A1**
(43) Date of publication of application: **13.10.1993**
(21) Application number: 92500039.0
(22) Date of filing: 10.04.1992
(51) Int. Cl.: B32B 17/10, B44C 5/04

(54) **Method for the manufacture of laminated glass containing metal decorative pieces**

(71) Applicant: Casas Adelantado, Luis, E-08017 Barcelona (ES)
(72) Inventor: Huang, Eric, Taipei (CN)
(74) Representative: Duran Moya, Luis-Alfonso

(57) **Abstract**

The method for the manufacture of laminated glass containing a metal piece (3) comprises: rinsing of the metal part by means of ultrasounds, the subsequent elimination of the static electricity and putting the glass (2) into a furnace together with a polivinil butiral layer on the glass part and the metal part, a second glass plate (1) being placed on top and submiting the whole assembly to warming up under controlled pressure, submitting the assembly to pressure and temperature up to 8,0 Kg/cm² and 135°C, cooling down the assembly to room temperature as a final stage.

## Description

### DESCRIPTION OF THE INVENTION

This invention relates to a manufacturing method for a kind of laminated glass containing a metal etching piece inside and its relevant products, with a metal etching piece put in between the double-glazing and no gap or bubble existing in the laminated layer.

As the metal etching piece is put in between the transparent plate glass, so the pattern of metal etching piece is visible from outside. It is a high-grade, practical and finely delicate finished products and are quite pleasing to eye no matter whether they are used as building materials, furnitures, screen, lamp ornaments or decorations. But such products are currently not decorated on building materials, furniture, screen, lamp ornaments or decorations. The main reason is due to that the manufacturing method of ordinary laminated glass (plate glass + PVB film + plate glass ----> rolling evacuation ----> finished products) has no way avoiding the bubble left in the glued glass containing metal etching piece inside and keeping complete clear transparency after they are glued, thus making the finished items unable to achieve the goal of being a highly exquisite products.

In view of above-mentioned facts, the inventor made intensive efforts to research. Finally, manufacturing method for a kind of laminated glass containing metal etching piece was developed after repeated tests and improvements, making the glued glass free of any bubble impurities, ideal for high-grade finely-delicate products and creating a sense of complete clear transparency.

Please refer to the flow chart of drawing 1 for manufacturing method of this invention, which comprises of following steps:
(1) Get ready the treated finished metal etching piece, put them in the supersonic degreasing tank and rinse thoroughly the purities and oily materials covered on metal surface so as to increase its glue binding:
(2) Use static electricity rug in dust-free room to cleanse glass surface to clear away static impurities covered on the glass surface:
(3) Operate on pressure furnace and lay the first layer of PVB (Polyvinyl Butyral) film on the first glass:
(4) Lay the metal etching piece on PVB film;
(5) Lay another layer of PVB film on metal etching piece;
(6) Put the 2nd glass on upper part of PVB film;
(7) Warm up directly to 40 degree C in pressure furnace at a pressure 3.5 kg/cm² for 30 minutes so as to keep them sealed around the glass. The metal etching piece is fixed tightly between two glasses to prevent the static electricity and impurities from penetrating inside;
(8) Relocate the initially-glued fixed glass block to vacuum pressure furnace, warm up to 60 degree C at normal temperature and apply the pressure to 8.0 Kg/cm² starting from 60 degree C. Later warm up gradually to 135 degree C and maintain at 135 degree C, 8.0 Kg/cm² for 30 minutes as shown in drawing 2.
(9) Cut off the power supply for heating and cool down to 40 degree C in natural way. But the pressure should still be kept at 8.0 Kg/cm².
(10) Release the pressure inside the vacuum furnace to normal pressure when temperature reaches 40 degree C, with this process lasting for 10 minutes;
(11) Take out the glass glued block and cool down in natural way to get finished products as shown in enclosure.

In the process of warm-up from 60 degree to 135 degree C, the PVB film starts melting at 80 degree C to 90 degree C, enabling the small bubbles on and around the metal etching piece be absorbed into the PVB film to become a state of clear transparency.

If there is need to manufacture the finished products of curved shape, please warm up first the plate glass to 600 degree C, then put them into the forming mould to bake warped and assemble in accordance with above-mentioned laminated mode for plate glass.

Please refer to drawing 3 and drawing 4. Products of this invention includes the gluing of first glass piece -1- and second glass piece together. The metal etching piece -3- is placed in between first glass piece -1- and second glass piece -2-. Though the PVB film around metal etching piece -3- has become totally transparent, but it is still tailor-made completely to the characteristics of glass transparency, thus creating a sense of excellent beauty for the products. Meanwhile, the products will exhibit fully the beauty of the pattern of the metal etching piece and can be kept permanently.

The metal piece of laminated glass products manufactured in this way will not be oxidated because the metal etching piece will be made in a state of vaccum after they are laminated. In addition to reinforcing the laminated plate glass, it keeps the metal etching piece that put in between holding a permanent character.

Based on the manufacturing method and its products provided by this invention, the metal etching piece can be accomodated definitely in the laminated glass, and this method can keep glued glass free of any gap, bubble or impurities inside and make the finished products totally clear transparent. They are widely used in building materials, furnitures, screen or ornaments, stationery, cosmetic box, lamp decorations and suspension ornaments, etc. and they are strong, durable, graceful, delicate and are a new invention of valuable use in industry. As this invention is in conformity with qualifications for patent claim, thus claim is made along with a written document.

Description of drawings:

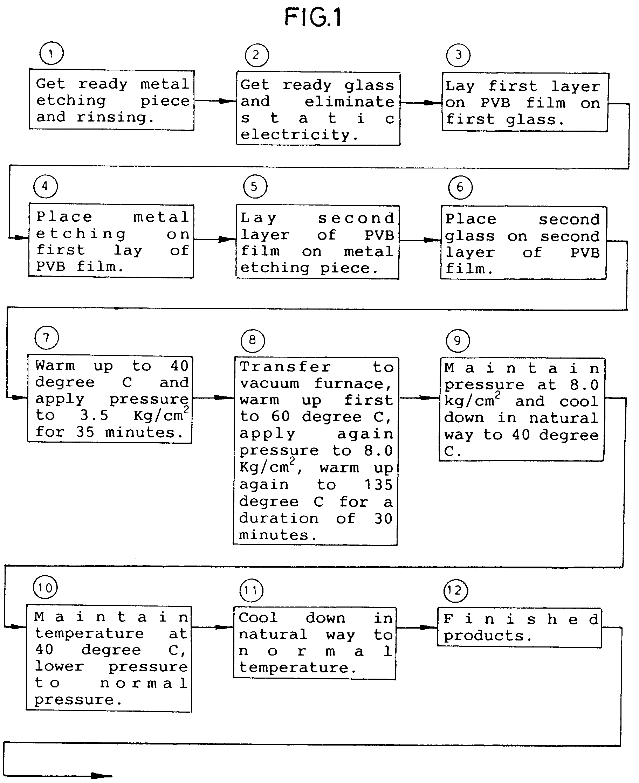

Figure 1 is a flow chart of manufacturing method for this invention.

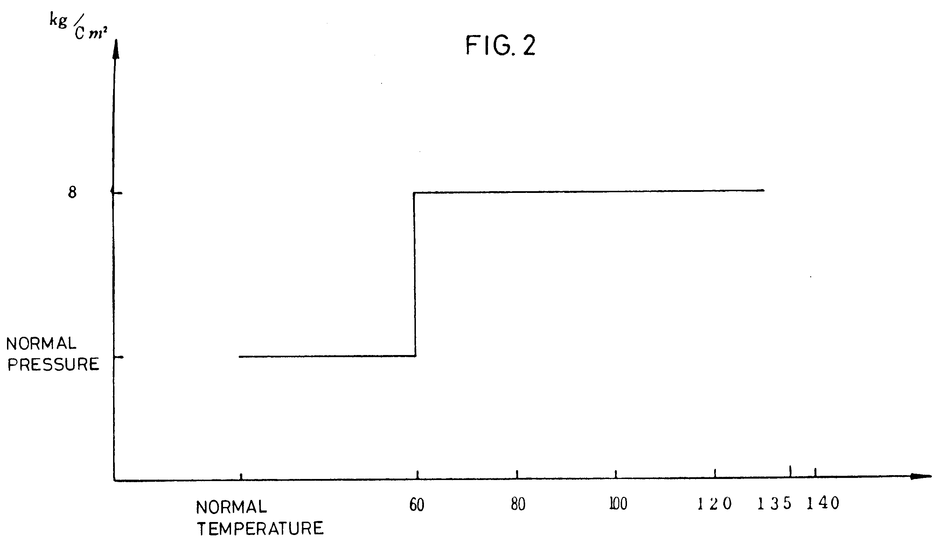

Figure 2 is a chart showing the state of warm-up and pressurization for glass block after they are glued initially.

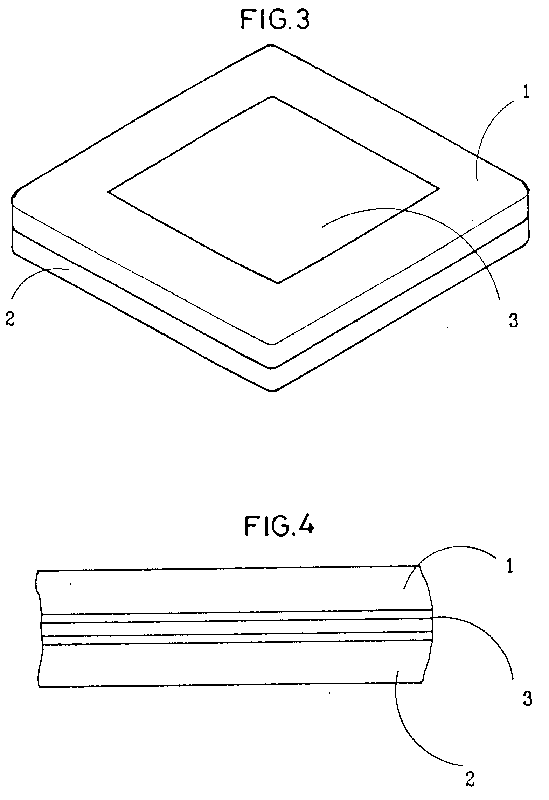

Figure 3 is an elevational view of this invention.
Figure 4 is a magnified sectional view of this invention.

Enclosure: the finished products of this invention.

## Claims

1. Manufacturing method of a kind of laminated glass containing metal etching piece, which includes following steps:
(1) Get ready the treated finished metal etching piece and rinse them thoroughly using supersonic way;
(2) Use static electricity rug to cleanse glass to remove the static electricity and impurities;
(3) Put glass in pressure furnace first and lay first layer of PVB film on first glass;
(4) Lay the metal etching piece on first PVB film;
(5) Lay 2nd layer of PVB film on metal etching piece;
(6) Put second glass on 2nd layer of PVB film;
(7) Warm up to 40 degree C in pressure furnace, with the pressure reaching 3.5 kg/cm². After 30 minutes, the initially-glued glass block is forming;
(8) Relocate the initially-glued glass block to vacuum pressure furnace, heat to 60 degree C at normal temperature and apply again the pressure to 8.0 Kg/cm², then warm up gradually to 135 degree C by maintaining pressure at 8.0 Kg/cm². Keep the this state for 30 minutes after warming up to 135 degree C.
(9) Cut off the power supply for heating and cool down to 40 degree C in natural way, but the pressure should remain at 8.0 Kg/cm²;
(10) Release the pressure to normal pressure after reaching a temperature of 40 degree C. The pressure release lasts for about 10 minutes; and
(11) Take out the glass glued block and cool down to normal temperature in natural way, then the finished products will be obtained.

2. A kind of laminated glass with metal etching piece inside, comprising of;
- First glass,
- First PVB film is put on first glass;
- Metal etching piece is put on first PVB film;
- Second PVB film is put on metal etching piece; and
- Second glass is placed on second PVB film;
The PVB film is made melting by means of warm-up and pressurization, and the bubbles between the glasses are melting into film, making the glass glued block becoming completely clear transparent.
